# EUROPEAN PATENT SPECIFICATION

(11) **EP 2 685 147 B1**
(45) Date of publication and mention of the grant of the patent: **20.06.2018**
(21) Application number: 13174642.2
(22) Date of filing: 02.07.2013
(51) Int. Cl.: F16L 41/06, F16L 47/34

(54) **Top-piece device with position indicator**
Oberteilvorrichtung mit Positionsanzeiger
Dispositif de partie supérieure avec indicateur de position

(30) Priority: 13.07.2012 NL 2009187
(43) Date of publication of application: 15.01.2014
(73) Proprietor: Pipelife Nederland B.V., 1601 MA Enkhuizen (NL)
(72) Inventor: Guitoneau, Hans Edward, 1613 DH Grootebroek (NL); Scucces, Marcel Roger, 1461 DM Zuidoostbeemster (NL)
(74) Representative: Nederlandsch Octrooibureau

(56) References cited:
- EP-A1- 0 580 222
- EP-A1- 2 520 842
- DE-A1- 19 531 913
- DE-A1-102006 043 531
- FR-A1- 2 329 914
- GB-A- 2 407 855
- NL-C- 2 005 020

## Description

The invention relates to a top-piece device for a plastic pipe for the transportation of a fluid, comprising a saddle which can be fitted to the plastic pipe and a top piece which cooperates with the saddle, which top piece has a chamber with an outlet on the side thereof which is to be turned towards the plastic pipe, an introduction non-return valve via which a tool can be introduced into the chamber, a gasket for sealing said tool with respect to the chamber, a closing means on that end of the chamber which is situated opposite the outlet, a pressure-relief valve which is sealed with respect to the chamber and which is in an open position in the rest position and which can be brought to the closed position when a predetermined current force and/or pressure difference across the pressure-relief valve is exceeded, a piece of pipe from which the pressure-relief valve is suspended and which piece of pipe has at least a lateral opening in its wall, as well as a branch which is connected to the chamber.

With such a top-piece device which has been fitted to a pressurized gas line, it is possible to retrofit a pressure-relief valve. Conventional top-piece devices were not provided with a pressure-relief valve. This was a drawback, in particular in view of the relatively stringent safety requirements which are aimed at preventing an excessively high flow in the branch, as an increased flow could be the result of a leak in the gas line. In order to protect top-piece devices which had already been fitted at an earlier stage, the pressure-relief valve could be retrofitted without the gas pressure having to be removed from the plastic pipe. This is possible because the known top-piece device is already provided with shut-off provisions in connection with the fitting of the top-piece device itself on the pressurized plastic pipe. These same shut-off provisions are used in order to be able to fit the pressure-relief valve while the plastic pipe is under pressure. Such a top-piece device is known from EP2520842 (A1) which was filed on 03.05.2012 and published on 07.11.2012. Thus, it is possible to provide the top-piece device with a pressure-relief valve in this way, after the road has been broken open. Via the pressure-relief valve, the interior of the piece of pipe and the holes therein, the gas can then flow into the branch. In order to prevent the flow of gas from being excessively restricted by the retrofitted piece of pipe with pressure-relief valve, it is preferable to align the holes in the piece of pipe with respect to the branch. Thus, the desired flow can be achieved. Such a device can be seen in FR2329914 (A1), which provides equipment for tapping into a pipe where the body of the tap is integral with the clamp holding it and contains a rotating sleeve with a hole which aligns with the opposite branch pipe and forms the tap valve. Another similar prior art system is shown in DE-A-10 2006 043 531. In this system, a pipe unit is provided and connected to a bore hole in a wall of a gas pipeline. A branch pipe branches from the pipeline for connection, and a flow control device is provided in a casing that is movable inside a pipe after engaging the pipeline in or at the bore hole.

However, this setup may give rise to a problem in such systems: after the piece of pipe with the pressure-relief valve has been fitted in the chamber of the top-piece device, the correct orientation of the holes in the piece of pipe with respect to the branch can no longer be controlled adequately, resulting in the fact that the required flow properties cannot be guaranteed. Correcting an incorrect orientation is cumbersome, due to the position of the top-piece device in the subsoil. In addition, the desired orientation could only be approached experimentally.

It is therefore an object of the invention to improve a top-piece device of the type mentioned above in such a manner that it is always possible to ensure a correct orientation of the piece of pipe with respect to the branch. This object is achieved by the top-piece device of claim 1 wherein a sign is provided indicating the orientation of said lateral opening in the wall of the piece of pipe, the piece of pipe has an end which extends through the closing means, and the sign is situated on said end. Preferably, the sign has the same orientation as the lateral opening.

During installation of the assembly of the piece of pipe and pressure-relief valve in the chamber, the orientation thereof can be left out of consideration until the moment just before said assembly is fastened. After the piece of pipe with pressure-relief valve has been installed, the piece of pipe can be rotated in the correct direction with the help of the sign in such a way that the holes in the piece of pipe reach the desired orientation with respect to the branch. In this position, the piece of pipe can then be fixed, for example by tightening the closing means. The sign may be configured in any desired manner; preferably the sign is in the shape of an arrow which, viewed from the longitudinal axis of the piece of pipe, is directed in the same direction as the lateral opening.

Preferably, at least one lateral opening is situated at the location of the branch. Furthermore, at least one lateral opening may be aligned with respect to the branch. The piece of pipe may have two diametrically opposite lateral openings in its wall in order to increase the through-flow.

The piece of pipe may be rotatably suspended from the closing means, in such a way that, after the closing means has been fitted to the chamber, the piece of pipe can still be moved to the desired orientation. Subsequently, the closing means is tightened, while maintaining said orientation of the piece of pipe.

In connection with sealing the top-piece device when fitting the pressure-relief valve, the piece of pipe may have a nominal diameter which is greater than the internal diameter of the gasket. Furthermore, the piece of pipe may have a constriction at the location of the gasket, which constriction has an external diameter which is smaller than the internal diameter of the gasket. Thus, the gasket is prevented from stretching as a result of a constant stress state, and it is possible to ensure that the gasket continues to operate correctly.

Furthermore, the external surface of the piece of pipe may have at least one protuberance. This protuberance may be annular and assists the displacement of the piece of pipe along the gasket. The closing means may be configured as a screw cap which is screwed onto an external screw thread of the top piece.

The invention furthermore relates to an assembly, comprising a closing means, a piece of pipe which cooperates with the closing means and a pressure-relief valve suspended from the piece of pipe, as described above.

In the following, the invention will be described in more detail with reference to the exemplary embodiment illustrated in the figures, in which:
Fig. 1 shows the top-piece device, fitted to a plastic pipe before a hole is made therein.
Fig. 1a shows the view from Fig. 1 along Ia.
Fig. 1b shows the view from Fig. 1 along Ib.
Fig. 2 shows the top-piece device with a drilling tool introduced therein.
Fig. 3 shows the top-piece device after a hole has been made therein and the pressure-relief valve has been fitted.
Fig. 3a shows the top view along IIIa-IIIa from Fig. 3.
Fig. 4 shows a further variant of the top piece which is not covered by the current claims.
Fig. 4a shows the top view along IVa-IVa from Fig. 4.

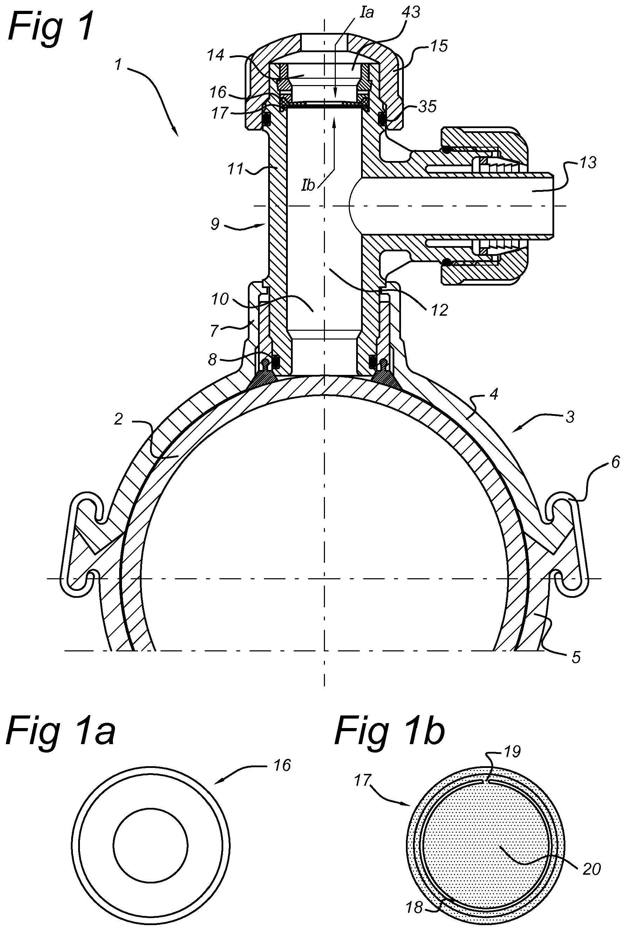

Fig. 1 shows the top-piece device 1 which is fitted on a plastic pipe 2. The top-piece device 1 consists of the saddle 3 and the top piece which is denoted overall by reference numeral 9. The saddle 3 consists of an upper ring part 4 and the bottom ring part 5 which are clamped around the plastic pipe 2 by means of the clamps 6. The upper ring part 4 has a collar 7 containing a sealing ring 8 in which the bottom end 10 of the top piece 9 is fixed.

The top piece 9 consists of a tubular body 11 which defines a chamber 12. The branch 13 is connected to the chamber 12 at right angles to the tubular body 11. An auxiliary line (not shown) may be connected to the branch 12 which leads, for example, to a dwelling. The upper end 14 is situated opposite the bottom end 10 of the top piece 9 and, in the illustrated position, is closed off by the screw cap 15. Near the upper end 14 of the chamber 12, there is first the insert 43, the gasket 16 (see Fig. Ia), followed by the introduction non-return valve 17 just below (see Fig. Ib). This introduction non-return valve 17 consists of a single part of flexible material and has an annular opening 18 which extends in the circumferential direction over the largest part to form an elastic pivot 19. This elastic pivot 19 carries the actual valve body 20 which bears sealingly against the gasket 16 on account of an overpressure in the chamber 12. On the other hand, the valve body 20 can be pushed open by pushing a tool which is to be described in more detail below into it after the screw cap 15 has been removed.

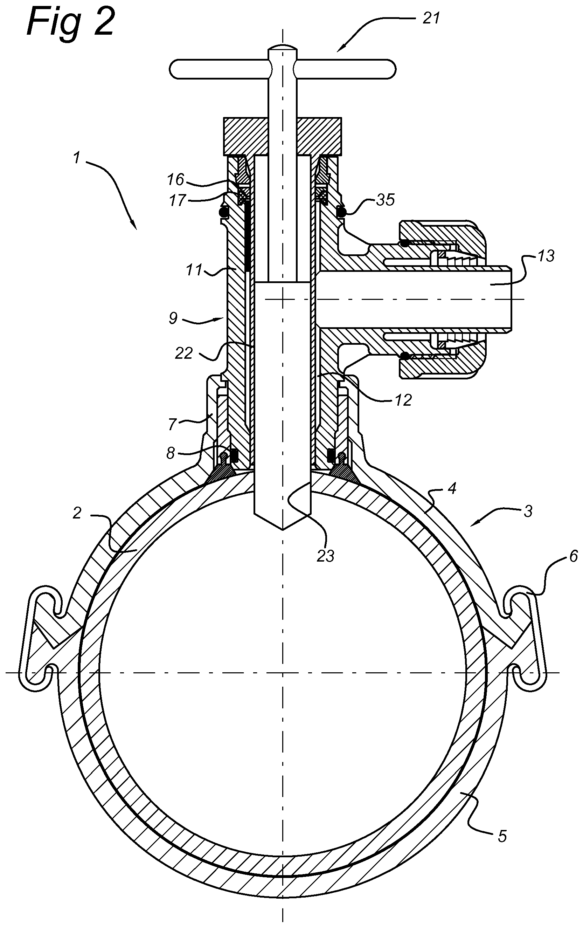

The drill tool 21 shown in Fig. 2 may be one of these tools. This drill tool 21 is rotatably and sealingly accommodated in a bush 22 which in turn bears sealingly against the gasket 16. As described above, this drill tool 21 is pushed through the gasket 16 together with the bush 22 once the screw cap 15 has been removed, in which case the valve body 20 is pivoted into the open position in Fig. 2. Subsequently, a hole 23 is drilled into the plastic pipe 2 in a known manner by means of the drill tool. As the drill tool 21 and the bush 22 are sealed with respect to the chamber 12 by the gasket 16, the hole 23 can be made while there is an overpressure in the plastic pipe 2.

After the hole 23 has been drilled, the drill tool 21 and the bush 22 are removed, in which case the introduction non-return valve 17, in particular the valve body 20 thereof, comes to rest against the gasket 16, thus preventing the overpressure from being able to escape from the plastic pipe 2. The fluid present in the plastic pipe 2 can thus flow directly into the pipe (not shown) which is connected to the branch 13.

A traditional top-piece device can be connected to a plastic pipe in the above-described manner. Such traditional top-piece devices are used in great numbers. In principle, these work well, but it is nevertheless possible that problems develop if the auxiliary line and/or the installation which is connected thereto becomes defective. In that case, an undesirably large fluid flow, such as a gas flow, may occur. It is also possible for the problem to occur that unauthorized changes are made to the installation which is connected to the auxiliary line, also resulting in the plastic pipe 2 discharging relatively large amounts of fluid. It is therefore desirable for a so-called pressure-relief valve to be fitted in the top-piece device. However, replacing the already installed top-piece devices is problematic, as this would lead to relatively high costs due to the removal of the traditional top-piece device and the installation of a top-piece device with pressure-relief valve.

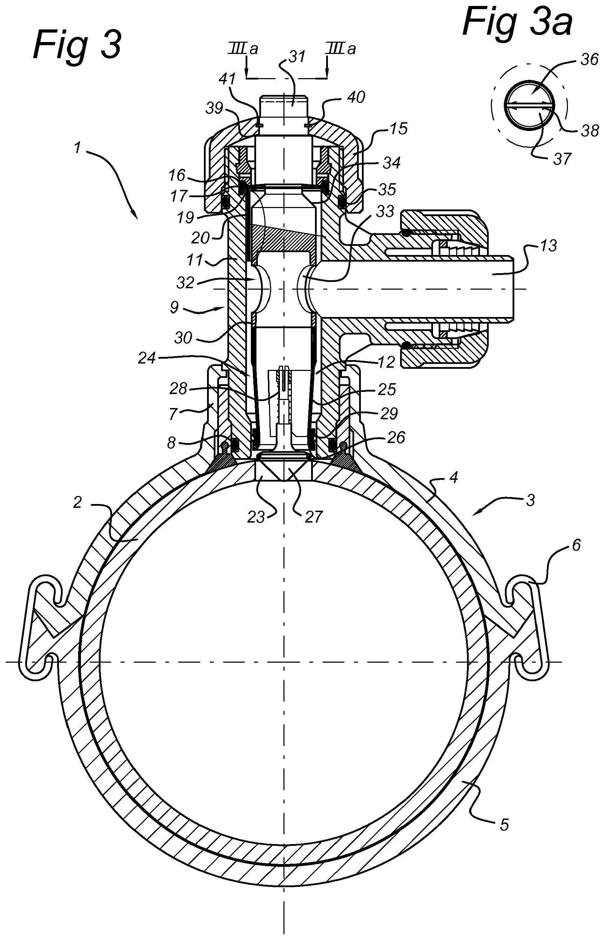

In order to find a solution to these problems, a pressure-relief valve 24 is fitted in the chamber 12 of the top piece 9 in the top-piece device 1 according to the invention, as is illustrated in Fig. 3. This pressure-relief valve 24 has a housing 25 with a valve seat 26 at the bottom end. Furthermore, the pressure-relief valve 24 has a valve body 27 which, in the illustrated position, is open on account of the prestressing spring 28. The valve body 27 has a head which is shaped in such a manner that, at a certain current force and/or flow rate of the fluid flow from the plastic pipe 2 via the hole 23, said valve body 27 is pushed upwards counter to the prestress and against the seat 26. Thus, the supply of fluid to the branch is closed when the flow is too strong. By means of a sealing ring 29, the housing 25 of the pressure-relief valve 24 is sealed with respect to the internal wall of the chamber 12.

In order to be able to fix the pressure-relief valve 24 in the desired position in the chamber 12, the pressure-relief valve 24 is suspended from the piece of pipe 30. This piece of pipe 30 has a head 31 which is in turn attached, for example in a releasable manner, to the screw cap 15. The head 31 extends into the hole 40 in the screw cap 15, and is suspended in said hole 40 by means of the sealing ring 41. After the hole 23 has been made in the plastic pipe 2 in the above-described manner, and the drill tool 21, 22 has been removed from the chamber 12, the assembly 32 comprising of pressure-relief valve 24, piece of pipe 30 and screw cap 15 can then be fitted into or onto the chamber 12, respectively. To this end, the housing 25 of the pressure-relief valve 24 and also the piece of pipe 30 are pushed through the gasket 16. The introduction non-return valve 17 is then opened, in which case in particular the valve body 20 is pushed to the open position, as is illustrated in Fig. 3. This may be carried out while an overpressure prevails in the plastic pipe 2 and in the chamber 12 since, during the introduction, the sealing is secured by the gasket 16. While it is possible in this case for some gas to escape, the amount will be very limited.

As the assembly 32 is gradually being introduced further, the screw cap 15 will eventually mate with the screw thread which is provided on the top piece 9 in such a manner that the chamber 12 is then sealed by the sealing ring 35 of this screw cap 15. In this position, the sealing by means of the gasket 16 is no longer required. In this connection, the piece of pipe 30 is provided with a constriction 34 which is situated at the location of the gasket 16. This constriction has an external diameter which is smaller than or is equal to the internal diameter of the gasket 16, in such a manner that the gasket 16 is now in a completely stress-free state. As a result thereof, the action of the gasket 16 can be ensured for a prolonged period of time, which is important if, for example, the assembly 32 has to be removed after some time.

In the wall of the piece of pipe 30, a number of holes 33 are provided which, in the illustrated exemplary embodiment, are situated at the location of the branch 13. Thus, fluid which flows into the piece of pipe 30 from the plastic pipe 2 when the pressure-relief valve 24 is open can then enter the branch 13. In order to ensure that the holes 33 are aligned with respect to the branch 13, the sign 36 shown in Fig. 3a is provided with the arrows 37 and/or the slot 38 on the head 31 of the piece of pipe 30. By rotating the piece of pipe 30 in such a manner (for example using a screw driver which is inserted into the slot 38) that the arrows 37 and/or the slot 38 are in line with the branch, it is ensured that the holes 33 are aligned. Below the head 31, there is a widening 39 which is wider than the opening 40 in the closing means 15, so that the piece of pipe 30 may be held in place adequately after the closing means 15 has been tightened.

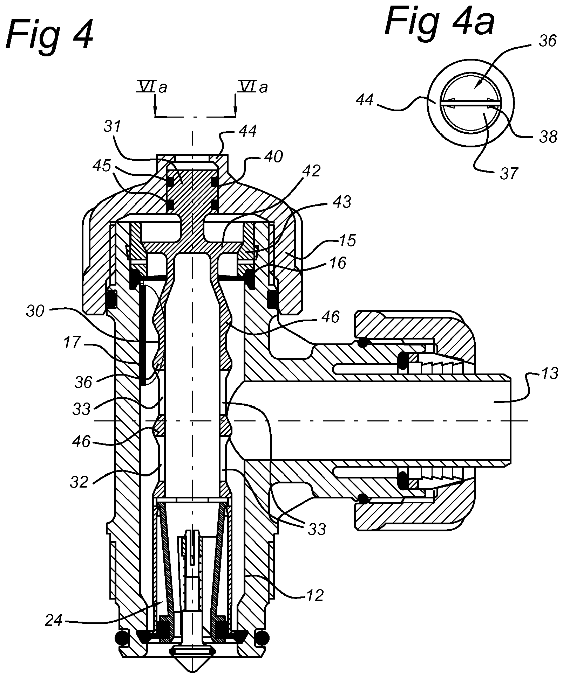

The variant shown in Fig. 4, which is not covered by the current claims, has a piece of pipe 30 with a collar 42 which rests on the insert 43 near the top end of the chamber 12. The head 31 of the piece of pipe 30 protrudes through the opening 40 in the closing means 15, is sealed by the seals 45 with respect to the hole 40 and rests against the underside of the narrowing 44. When the closing means 15 is tightened on the tubular body 12, the piece of pipe is thus fixedly clamped between the closing means 15 and the insert 43. Before tightening the closing means 15, the holes 33 in the piece of pipe can be moved to the same orientation as the branch 13, using the sign 36, by rotating the piece of pipe 30 with respect to the closing means 15.

This variant also has a piece of pipe 30 on the outer surface which comprises annular protuberances 46. These protuberances facilitate guiding the piece of pipe through the gasket 16. These annular protuberances 46 also prevent the introduction non-return valve 17 from being pulled out during removal of the pressure-relief valve 24 with the piece of pipe 30, as the loss of the introduction non-return valve 17 or the loss of its function has to be prevented at all times, as otherwise a free discharge of fluid would result.

Although a pressure-relief valve consisting of a valve body with a shaped head has been described above, it is also possible to use differently shaped valve bodies, for example in the form of a sphere.

### List of reference numerals

- 1.: Top-piece device
- 2.: Plastic pipe
- 3.: Saddle
- 4.: Top ring part of saddle
- 5.: Bottom ring part of saddle
- 6.: Saddle clamp
- 7.: Saddle collar
- 8.: Sealing ring
- 9.: Top piece
- 10.: Bottom end of top piece
- 11.: Top-piece tubular body
- 12.: Chamber in tubular body
- 13.: Branch
- 14.: Top end of top piece
- 15.: Screw cap
- 16.: Gasket
- 17.: Introduction non-return valve
- 18.: Annular opening
- 19.: Elastic pivot
- 20.: Valve body
- 21.: Drill tool
- 22.: Sleeve
- 23.: Hole in plastic pipe
- 24.: Pressure-relief valve
- 25.: Pressure-relief valve housing
- 26.: Pressure-relief valve seat
- 27.: Valve body
- 28.: Prestressing spring
- 29.: Sealing ring
- 30.: Piece of pipe
- 31.: Head of piece of pipe
- 32.: Assembly of pressure-relief valve and piece of pipe
- 33.: Hole in piece of pipe
- 34.: Constriction in piece of pipe
- 35.: Seal of screw cap
- 36.: Sign
- 37.: Arrow shape
- 38.: Slot
- 39.: Thickening
- 40.: Hole
- 41.: Suspension
- 42.: Collar
- 43.: Insert
- 44.: Narrowing
- 45.: Seal
- 46.: Protuberance

## Claims

1. Top-piece device (1) for a plastic pipe (2) for the transportation of a fluid, comprising a saddle (3) which can be fitted to the plastic pipe (2) and a top piece (9) which cooperates with the saddle, which top piece has a chamber (12) with an outlet on the side (10) thereof which is to be turned towards the plastic pipe, an introduction non-return valve (17) via which a tool (21, 22) can be introduced into the chamber, a gasket (16) for sealing said tool with respect to the chamber, a closing means (15) on that end (14) of the chamber which is situated opposite the outlet, a pressure-relief valve (24) which is sealed with respect to the chamber (12) and which is in an open position in the rest position and which can be brought to the closed position when a predetermined current force and/or pressure difference across the pressure-relief valve is exceeded, a piece of pipe (30) from which the pressure-relief valve (24) is suspended and which piece of pipe (30) has at least a lateral opening (33) in its wall, as well as a branch (13) which is connected to the chamber (12), wherein a sign (36-38) is provided indicating the orientation of said lateral opening (33) in the wall of the piece of pipe (30), the piece of pipe (30) has an end which extends through the closing means (15), and the sign is situated on said end.

2. Top-piece device according to Claim 1, wherein the sign has the same orientation as the lateral opening (33).

3. Top-piece device according to Claim 1 or 2, wherein the sign is in the shape of an arrow which is directed in the same direction as the lateral opening (33) with respect to the longitudinal axis of the piece of pipe.

4. Top-piece device (1) according to one of the preceding claims, wherein at least a lateral opening (33) is situated at the position of the branch (13).

5. Top-piece device (1) according to one of the preceding claims, wherein at least a lateral opening (33) is aligned with respect to the branch (13).

6. Top-piece device (1) according to one of the preceding claims, wherein the piece of pipe (30) has two diametrically opposite lateral openings in its wall.

7. Top-piece device (1) according to one of the preceding Claims, wherein the piece of pipe is rotatable about its longitudinal axis with respect to the closing means (15).

8. Top-piece device (1) according to one of the preceding claims, wherein the piece of pipe (30) has a nominal diameter which is greater than the internal diameter of the gasket (16).

9. Top-piece device (1) according to one of the preceding claims, wherein the piece of pipe (30) has a constriction (34) at the location of the gasket (16), which constriction has an external diameter which is smaller than or equal to the internal diameter of the gasket.

10. Top-piece device according to one of the preceding claims, wherein the external surface of the piece of pipe (30) has at least one protuberance (46).

11. Top-piece device according to Claim 10, wherein the protuberance (30) is annular.

12. Top-piece device according to Claim 10 or 11, wherein several spaced-apart protuberances (46) are provided and are situated in the longitudinal direction of the piece of pipe (30).

13. Top-piece device (1) according to one of the preceding claims, wherein the closing means is a screw cap (15) which is screwed onto an external screw thread of the top piece (9).

14. Top-piece device (1) according to one of the preceding claims, wherein the piece of pipe (30) is suspended from the closing means (15).

15. Top-piece device (1) according to one of the preceding claims, wherein the piece of pipe (30) is supported with respect to the chamber (12).

16. Top-piece device (1) according to Claim 15, wherein the piece of pipe (30) has an external flange (42) which is supported with respect to the chamber (12), such as on an insert (43) in the chamber.

17. Assembly (32), comprising the top-piece device (1) according to Claim 14, wherein the piece of pipe (30) cooperates with the closing means (15).

## Patentansprüche

1. Oberteilvorrichtung (1) für ein Kunststoffrohr (2) zum Transport eines Fluids, umfassend einen am Kunststoffrohr (2) anbringbaren Sattel (3) und ein Oberteil (9), das mit dem Sattel zusammenwirkt, wobei das Oberteil eine Kammer (12) mit einem Auslauf an der Seite (10) davon aufweist, die dem Kunststoffrohr zugewandt ist, ein Einlaufrückschlagventil (17) über das ein Werkzeug (21, 22) in die Kammer eingeführt werden kann, eine Dichtung (16) zum Abdichten des Werkzeugs in Bezug auf die Kammer, ein Verschlussmittel (15) an dem Ende (14) der Kammer, das sich gegenüber dem Auslass befindet, ein Druckbegrenzungsventil (24), das in Bezug auf die Kammer (12) abgedichtet ist und das in einer geöffneten Position in der Ruheposition ist und das in eine geschlossene Position gebracht werden kann, wenn eine vorbestimmte Stromstärke und/oder Druckdifferenz über dem Druckbegrenzungsventil überschritten wird, ein Rohrstück (30), an dem das Druckbegrenzungsventil (24) aufgehängt ist und das Rohrstück (30) mindestens eine laterale Öffnung (33) in seiner Wandung aufweist, sowie ein Abzweig (13), der mit der Kammer (12) verbunden ist, wobei ein Zeichen (36 - 38) bereitgestellt ist, das die Orientierung der lateralen Öffnung (33) in der Wandung des Rohrstücks (30) anzeigt, das Rohrstück (30) ein Ende aufweist, das sich durch das Verschlussmittel (15) erstreckt und das Zeichen sich an dem Ende befindet.

2. Oberteilvorrichtung nach Anspruch 1, wobei das Zeichen die gleiche Orientierung wie die laterale Öffnung (33) aufweist.

3. Oberteilvorrichtung nach Anspruch 1 oder 2, wobei das Zeichen in Form eines Pfeils ist, der in die gleiche Richtung ausgerichtet ist wie die laterale Öffnung (33) in Bezug auf die Längsachse des Rohrstücks.

4. Oberteilvorrichtung (1) nach einem der vorhergehenden Ansprüche, wobei sich zumindest eine laterale Öffnung (33) an der Position des Abzweigs (13) befindet.

5. Oberteilvorrichtung (1) nach einem der vorhergehenden Ansprüche, wobei zumindest eine laterale Öffnung (33) in Bezug auf den Abzweig (13) ausgerichtet ist.

6. Oberteilvorrichtung (1) nach einem der vorhergehenden Ansprüche, wobei das Rohrstück (30) zwei diametral gegenüberliegende laterale Öffnungen in seiner Wandung aufweist.

7. Oberteilvorrichtung (1) nach einem der vorhergehenden Ansprüche, wobei das Rohrstück um seine Längsachse in Bezug auf das Verschlussmittel (15) rotierbar ist.

8. Oberteilvorrichtung (1) nach einem der vorhergehenden Ansprüche, wobei das Rohrstück (30) einen Nenndurchmesser hat, der größer als der innere Durchmesser der Dichtung (16) ist.

9. Oberteilvorrichtung (1) nach einem der vorhergehenden Ansprüche, wobei das Rohrstück (30) eine Einschnürung (34) an der Stelle der Dichtung (16) aufweist, wobei die Einschnürung einen äußeren Durchmesser aufweist, der geringer als oder gleich dem inneren Durchmesser der Dichtung ist.

10. Oberteilvorrichtung nach einem der vorhergehenden Ansprüche, wobei die äußere Oberfläche des Rohrstücks (30) mindestens einen Vorsprung (46) aufweist.

11. Oberteilvorrichtung nach Anspruch 10, wobei der Vorsprung (30) ringförmig ist.

12. Oberteilvorrichtung nach einem der Ansprüche 10 oder 11, wobei mehrere im Abstand voneinander angeordnete Vorsprünge (46) bereitgestellt sind und sich in der Längsrichtung des Rohrstücks (30) befinden.

13. Oberteilvorrichtung (1) nach einem der vorhergehenden Ansprüche, wobei das Verschlussmittel eine Schraubkappe (15) ist, die auf ein Außengewinde des Oberteils (9) geschraubt ist.

14. Oberteilvorrichtung (1) nach einem der vorhergehenden Ansprüche, wobei das Rohrstück (30) an dem Verschlussmittel (15) aufgehängt ist.

15. Oberteilvorrichtung (1) nach einem der vorhergehenden Ansprüche, wobei das Rohrstück (30) in Bezug auf die Kammer (12) gestützt ist.

16. Oberteilvorrichtung (1) nach Anspruch 15, wobei das Rohrstück (30) einen Außenflansch (42) aufweist, der in Bezug auf die Kammer (12) gestützt ist, zum Beispiel an einem Einsatz (43) in der Kammer.

17. Baugruppe (32), umfassend die Oberteilvorrichtung (1) nach Anspruch 14, wobei das Rohrstück (30) mit dem Verschlussmittel (15) zusammenarbeitet.

## Revendications

1. Dispositif de pièce supérieure (1) pour un tuyau en plastique (2) destiné au transport d'un fluide, comprenant une selle (3) qui peut être raccordée au tuyau en plastique (2) et une pièce supérieure (9) qui coopère avec la selle, laquelle pièce supérieure comporte une chambre (12) avec une sortie sur le côté (10) de celle-ci qui doit être tournée vers le tuyau en plastique, un clapet anti-retour d'introduction (17) via lequel un outil (21, 22) peut être introduit dans la chambre, un joint d'étanchéité (16) pour étanchéifier ledit outil par rapport à la chambre, des moyens de fermeture (15) sur cette extrémité (14) de la chambre qui est située opposée à la sortie, une soupape de surpression (24) qui est étanchéifié par rapport à la chambre (12) et qui est dans une position ouverte dans la position de repos et qui peut être amené à la position fermée lorsqu'une force de courant prédéterminée et/ou une différence de pression prédéterminée à travers la soupape de surpression est dépassée, une pièce de tuyauterie (30) à partir de laquelle la soupape de surpression (24) est suspendu et laquelle pièce de tuyauterie (30) a au moins une ouverture latérale (33) dans sa paroi, ainsi qu'une branche (13) qui est reliée à la chambre (12), dans lequel un signe (36-38) est prévu indiquant l'orientation de ladite ouverture latérale (33) dans la paroi de la pièce de tuyauterie (30), la pièce de tuyauterie (30) a une extrémité qui s'étend à travers les moyens de fermeture (15), et le signe est situé sur ladite extrémité.

2. Dispositif de pièce supérieure selon la Revendication 1, dans lequel le signe a la même orientation que l'ouverture latérale (33).

3. Dispositif de pièce supérieure selon la Revendication 1 ou 2, dans lequel le signe a la forme d'une flèche qui est dirigée dans la même direction que l'ouverture latérale (33) par rapport à l'axe longitudinal de la pièce de tuyau.

4. Dispositif de pièce supérieure (1) selon l'une quelconque des revendications précédentes, dans lequel au moins une ouverture latérale (33) est située au niveau de la position de la branche (13).

5. Dispositif de pièce supérieure (1) selon l'une quelconque des revendications précédentes, dans lequel au moins une ouverture latérale (33) est alignée par rapport à la branche (13).

6. Dispositif de pièce supérieure (1) selon l'une quelconque des revendications précédentes, dans lequel la pièce de tuyauterie (30) comporte deux ouvertures latérales diamétralement opposées dans sa paroi.

7. Dispositif de pièce supérieure (1) selon l'une quelconque des revendications précédentes, dans lequel la pièce de tuyauterie peut tourner autour de son axe longitudinal par rapport aux moyens de fermeture (15).

8. Dispositif de pièce supérieure (1) selon l'une quelconque des revendications précédentes, dans lequel la pièce de tuyauterie (30) a un diamètre nominal qui est supérieur au diamètre interne du joint d'étanchéité (16).

9. Dispositif de pièce supérieure (1) selon l'une quelconque des revendications précédentes, dans lequel la pièce de tuyauterie (30) comporte un étranglement (34) au niveau de l'emplacement du joint (16), lequel étranglement a un diamètre extérieur qui est inférieur ou égal au diamètre interne du joint d'étanchéité.

10. Dispositif de pièce supérieure selon l'une quelconque des revendications précédentes, dans lequel la surface externe de la pièce de tuyauterie (30) comporte au moins une protubérance (46).

11. Dispositif de pièce supérieure selon la Revendication 10, dans lequel la protubérance (30) est annulaire.

12. Dispositif de pièce supérieure selon la Revendication 10 ou 11, dans lequel plusieurs protubérances espacées (46) sont prévues et sont situées dans la direction longitudinale de la pièce de tuyauterie (30).

13. Dispositif de pièce supérieure (1) selon l'une quelconque des revendications précédentes, dans lequel le moyen de fermeture est un bouchon à vis (15) qui est vissé sur un filetage externe de la pièce supérieure (9).

14. Dispositif de pièce supérieure (1) selon l'une quelconque des revendications précédentes, dans lequel la pièce de tuyauterie (30) est suspendue aux moyens de fermeture (15).

15. Dispositif de pièce supérieure (1) selon l'une quelconque des revendications précédentes, dans lequel la pièce de tuyauterie (30) est supportée par rapport à la chambre (12).

16. Dispositif de pièce supérieure (1) selon la Revendication 15, dans lequel la pièce de tuyauterie (30) comporte une bride externe (42) qui est supportée par rapport à la chambre (12), comme sur un insert (43) situé dans la chambre.

17. Ensemble (32) comprenant le dispositif de pièce supérieure (1) selon la Revendication 14, dans lequel la pièce de tuyauterie (30) coopère avec les moyens de fermeture (15).
